# EUROPEAN PATENT SPECIFICATION

(11) **EP 4 404 504 B1**
(45) Date of publication and mention of the grant of the patent: **30.09.2026**
(21) Application number: 22869765.2
(22) Date of filing: 24.08.2022
(51) Int. Cl.: H04L 9/32, G06F 21/44, H04L 9/08, H04L 9/14, H04W 12/041, H04W 12/0431, H04W 12/0433, H04W 12/06

(54) **WIRELESS COMMUNICATION TERMINAL DEVICE, AUTHENTICATION AND KEY SHARING METHOD, PROGRAM, AND AUTHENTICATION AND KEY SHARING SYSTEM**
DRAHTLOSES KOMMUNIKATIONSENDGERÄT, AUTHENTIFIZIERUNGS- UND SCHLÜSSELTEILUNGSVERFAHREN, PROGRAMM SOWIE AUTHENTIFIZIERUNGS- UND SCHLÜSSELTEILUNGSSYSTEM
DISPOSITIF TERMINAL DE COMMUNICATION SANS FIL, PROCÉDÉ ET SYSTÈME D'AUTHENTIFICATION ET DE PARTAGE DE CLÉS ET PROGRAMME ASSOCIÉ

(30) Priority: 14.09.2021 JP 2021149641
(43) Date of publication of application: 24.07.2024
(73) Proprietor: KDDI Corporation, Tokyo 163-8003 (JP)
(72) Inventor: KIYOMOTO, Shinsaku, Fujimino-shi, Saitama 356-8502 (JP); FUKUSHIMA, Kazuhide, Fujimino-shi, Saitama 356-8502 (JP)
(74) Representative: Krauns, Christian
(86) International application number: PCT/JP2022/031899
(87) International publication number: WO 2023/042618

(56) References cited:
- WO-A1-2021/036292
- JP-A- 2015 126 485
- JP-A- 2017 529 807
- US-A1- 2021 135 878
- US-B2- 7 793 102

## Description

### TECHNICAL FIELD

The present invention relates to a wireless communication terminal device, an authentication and key sharing method, a program, and an authentication and key sharing system.

The present application claims priority on Japanese Patent Application No. 2021-149641, filed September 14, 2021.

### BACKGROUND ART

As infrastructures for high-speed mobile communication, 5G networks are coming into widespread use. The security on 5G networks is performed by the mutual link authentication described below between wireless communication terminal devices and networks. That is, a unique secret key (K) written into a SIM card provided in a terminal device is shared with an authentication device on the network side, and an encryption key (CK) and an authentication key (IK) used for communication are dynamically derived from the secret key (K). Therefore, during link authentication between a terminal device and a network, three types of algorithms are used, for the key derivation process using the secret key (K), for the encryption process using the encryption key (CK) and the authentication key that have been derived, and for the authentication process. Such a security configuration for a 5G network is disclosed, for example, in Non-Patent Document 1.

The US 7,793,102 B2 discloses a method of mutually authenticating, firstly, a portable object assigned a unique identifier and including first wireless communications means and, secondly, a public access terminal including second wireless communications means and telecommunications means for communicating via a telecommunications network. The portable object is assigned a wireless communication key (Kme). An authentication server is installed on the network and adapted to determine the key Kme from the identifier. The identifier of the portable object is sent to the terminal and then from the terminal to the authentication server. The authentication server determines the key Kme and allocates the wireless communication key Kme to a calculation unit. The calculation unit calculates a session key (Ksession) from the key Kme of the portable object and allocates the key Ksession to the public access terminal. The terminal sends the portable object a first message signed using the key Ksession, the portable object acquires the key Ksession from the first message and the key Kme, and authenticates the terminal by verifying the signature of the first signed message. The portable object sends the terminal a second message signed with the key Ksession, and the terminal authenticates the portable object by verifying the signature of the second signed message.

### [Prior Art Document]

### [Non-Patent Documents]

[Non-Patent Document 1] 3GPP TS 33. 102 V16.0.0 (2020-07), Technical Specification, 3rd Generation Partnership Project; Technical Specification Group Services and System Aspects; 3G Security; Security architecture (Release 16)

### SUMMARY OF INVENTION

### [Problems to be Solved by the Invention]

Currently, technical specifications are being considered for a sixth-generation mobile communication system (6G) that is faster, that has lower latency, and that has excellent multiconnectivity. In 6G networks, the data processing associated with security is required to be as compact as possible in order to improve communication performance such as the high-speed performance. In this regard, there was a problem in that there is a need to simplify the scheme for authentication and key sharing between terminal devices and networks in comparison with 5G networks.

One objective of the present invention is to provide a wireless communication terminal device, an authentication and key sharing method, a program, and an authentication and key sharing system that, by using authenticated encryption as a primitive, for an authentication process between wireless communication terminal devices and a network in a mobile communication network, makes the protocol more efficient, and allows for more simple execution while maintaining the necessary security level.

### [Means for Solving the Problems]

The problem of the present invention is solved by a wireless communication terminal device according to the independent claim 1 as well as by an authentication and key sharing method according to the independent claim 6 as well as by a program according to the independent claim 7 as well as by an authentication and key sharing system according to the independent claim 8 as well as by a base station according to the independent claim 10, while the dependent claims refer to further advantageous developments of the present invention.

A wireless communication terminal device according to one embodiment of the present invention is provided with a control unit, a storage unit that stores a unique key shared with an authentication server, and a communication unit, and the control unit is provided with an authentication request unit that generates a first random number, and that transmits to a base station, through the communication unit, an authentication request including the first random number and identification information for the wireless communication terminal device; an authenticated encryption key derivation unit that receives a response request from the base station, which has acquired a second random number generated by the authentication server that has received the authentication request from the base station, first authenticated ciphertext obtained by authenticated encryption of the first random number and the second random number, second authenticated ciphertext obtained by authenticated encryption of the second random number, and the first authenticated encryption key, the response request including the second random number and the first authenticated ciphertext, and that calculates a second authenticated encryption key based on the first random number, the second random number, and the unique key; and a response processing unit that returns to the base station, through the communication unit, a response including third authenticated ciphertext obtained by authenticated encryption of the second random number using the second authenticated encryption key calculated by the authenticated encryption key derivation unit.

The authentication request unit may transmit to the base station, through the communication unit, an authentication request obtained by encrypting the first random number and the identification information for the wireless communication terminal device by using a public key of the wireless communication terminal device.

The authenticated encryption key derivation unit may derive a key for authentication and a key for encryption, based on the first random number, the second random number, and the unique key, using two different key derivation functions.

The authenticated encryption key derivation unit may derive an authenticated encryption key, based on the first random number, the second random number, and the unique key, using a single key derivation function.

The authenticated encryption key derivation unit may determine the validity of the calculated second authenticated encryption key based on the first authenticated ciphertext included in the response request received from the base station.

An authentication and key sharing method according to one embodiment of the present invention is performed by a wireless communication terminal device, which is provided with a control unit, a storage unit that stores a unique key shared with an authentication server, and a communication unit, executing an authentication request step of generating a first random number, and of transmitting to a base station, through the communication unit, an authentication request including the first random number and identification information for the wireless communication terminal device; an authenticated encryption key derivation step of receiving a response request from the base station, which has acquired a second random number generated by the authentication server that has received the authentication request from the base station, first authenticated ciphertext obtained by authenticated encryption of the first random number and the second random number, second authenticated ciphertext obtained by authenticated encryption of the second random number, and the first authenticated encryption key, the response request including the second random number and the first authenticated ciphertext, and of calculating a second authenticated encryption key based on the first random number, the second random number, and the unique key; and a response processing step of returning to the base station, through the communication unit, a response including third authenticated ciphertext obtained by authenticated encryption of the second random number using the second authenticated encryption key calculated in the authenticated encryption key derivation step.

A program according to one embodiment of the present invention makes a computer function as the wireless communication terminal device described above.

An authentication and key sharing system according to one embodiment of the present invention includes a wireless communication terminal device, a base station, and an authentication server, wherein
the wireless communication terminal device is provided with a terminal device control unit, a storage unit that stores a unique key shared with the authentication server, and a terminal device communication unit, and the terminal device control unit is provided with an authentication request unit that generates a first random number, and that transmits to the base station, through the terminal device communication unit, an authentication request including the first random number and identification information for the wireless communication terminal device, an authenticated encryption key derivation unit that receives a response request from the base station, which has acquired a second random number generated by the authentication server that has received the authentication request from the base station, first authenticated ciphertext obtained by authenticated encryption of the first random number and the second random number, second authenticated ciphertext obtained by authenticated encryption of the second random number, and the first authenticated encryption key, the response request including the second random number and the first authenticated ciphertext, and that calculates a second authenticated encryption key based on the first random number, the second random number, and the unique key, and a response processing unit that returns to the base station, through the terminal device communication unit, a response including third authenticated ciphertext obtained by authenticated encryption of the second random number using the second authenticated encryption key calculated by the authenticated encryption key derivation unit;
the base station is provided with a base station control unit and a base station communication unit, and the base station control unit is provided with an authentication request transfer unit that receives from the wireless communication terminal device, through the base station communication unit, the authentication request including the first random number and the identification information for the wireless communication terminal device, and that transmits the authentication request that has been received to the authentication server, an authentication vector reception unit that receives from the authentication server, through the base station communication unit, an authentication vector including the second random number generated by the authentication server, first authenticated ciphertext obtained by authenticated encryption of the first random number and the second random number, second authenticated ciphertext obtained by authenticated encryption of the second random number, and the first authenticated encryption key, and a response request transmission unit that transmits to the wireless communication terminal device, through the base station communication unit, a response request including the second random number and the first authenticated ciphertext included in the authentication vector; and
the authentication server is provided with an authentication server control unit and an authentication server communication unit, and the authentication server control unit is provided with an authentication request reception unit that receives from the base station, through the authentication server communication unit, the authentication request including the first random number and identification information for the wireless communication terminal device, and an authentication vector preparation unit that generates the second random number, that generates the authentication vector by calculating the first authenticated encryption key based on the first random number, the second random number, and the unique key, by calculating the first authenticated ciphertext obtained by authenticated encryption of the first random number and the second random number, and by calculating the second authenticated ciphertext obtained by authenticated encryption of the second random number, and that transmits the authentication vector to the base station through the authentication server communication unit.

In the authentication and key sharing system, the authentication request unit may transmit to the base station, through the terminal device communication unit, an authentication request obtained by encrypting the first random number and the identification information for the wireless communication terminal device by using a public key of the wireless communication terminal device; the authentication request transfer unit may transmit the authentication request to the authentication server; and the authentication request reception unit may receive the authentication request through the authentication server communication unit, and may acquire the first random number and the identification information for the wireless communication terminal device by decrypting the authentication request by using a private key.

### [Advantageous Effects of the Invention]

According to the present invention, by using authenticated encryption as a primitive, for an authentication process between wireless communication terminal devices and a network in a mobile communication network, the protocol can be made more efficient, and more simple execution is made possible while maintaining the necessary security level.

### BRIEF DESCRIPTION OF DRAWINGS

FIG. 1 is a block diagram illustrating an example of a configuration of a mobile communication network having an authentication and key sharing system according to an embodiment of the present invention.
FIG. 2 is a block diagram illustrating an example of a configuration of a wireless communication terminal device according to an embodiment.
FIG. 3 is a block diagram illustrating an example of a configuration of a base station according to an embodiment.
FIG. 4 is a block diagram illustrating an example of a configuration of an authentication server according to an embodiment.
FIG. 5 is a diagram indicating an example of the flow of a key derivation process implemented by an authentication and key sharing system according to an embodiment.
FIG. 6 is a sequence diagram indicating an example of the flow of data processing executed by an authentication and key sharing system according to an embodiment of the present invention.
FIG. 7 is a sequence diagram indicating an example of the flow of data processing executed by an authentication and key sharing system according to a modified example of an embodiment of the present invention.

### EMBODIMENTS FOR CARRYING OUT THE INVENTION

Hereinafter, the present invention will be explained with reference to the attached drawings in accordance with embodiments thereof.

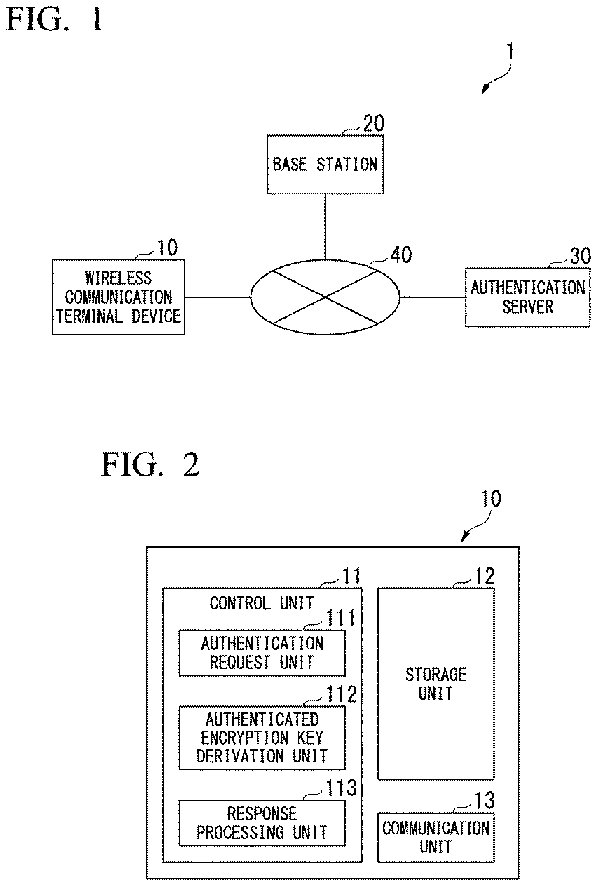

FIG. 1 schematically illustrates an example of the overall configuration of a mobile communication system 1 to which the authentication and key sharing system according to an embodiment of the present invention is applied. In the mobile communication system 1 in FIG. 1, a wireless communication terminal device 10 (hereinafter abbreviated to "terminal device 10" where the full name is not particularly necessary), a base station 20, and an authentication server 30 are communicably connected to a network 40. The network 40 is a mobile communication network including a wireless and a wired communication network. The terminal device 10 is a wireless communication terminal device, such as a smartphone or a tablet terminal, that can communication with another terminal device 10 by wireless communication with a base station 20. The base station 20 mediates communication between the terminal devices 10 and exchanges information with the authentication server to execute authentication processes of the terminal devices 10 for communicating with other terminal devices 10. The authentication server 30 executes various types of key derivation processes, etc. necessary for the authentication processes of the terminal devices 10 based on shared information, such as identification information for the terminal devices 10, received from the base station 20. In the authentication and key sharing system according to the present embodiment applied to the mobile communication system 1, an authenticated encryption process is used as a cryptographic primitive for the authentication process between the base station and the terminal devices described above. The algorithms used when executing the key derivation process, the encryption process, and the authentication process necessary for the authenticated encryption process are integrated to reduce data processing associated with the authentication process and to reduce hardware resources. The authentication and key sharing system according to the present embodiment can be favorably applied to a sixth-generation mobile communication system, or so-called 6G, though it is not limited thereto.

Next, the wireless communication terminal device 10, the base station 20, and the authentication server 30 will each be explained. FIG. 2 illustrates an example of the functional configuration of the wireless communication terminal device 10 according to the present embodiment.

The terminal device 10 is an information processing device (computer) having communication functions, such as a smartphone or a tablet terminal, and is provided with a control unit 11, a storage unit 12, and a communication unit 13, as well as an input/output device, etc. for various types of data.

The control unit 11 is a portion that controls the terminal device 10 overall, and that realizes the respective functions of the terminal device 10 in the present embodiment by appropriately reading out and executing various programs stored in the storage unit 20. The control unit 10 may be a processor such as a CPU.

The storage unit 12 is a storage area for various types of data, various types of programs for making a hardware group function as the terminal device 10, etc., and may be a ROM, a RAM, a flash memory, a semiconductor (SSD), etc. Specifically, the storage unit 20 stores programs for making the control unit 10 execute the respective functions of the present embodiment, various parameters, data input from the base station 20 to be described below, etc., data such as various types of keys derived by the respective functional units described below, etc. The storage unit 20 includes a storage medium in which identification information unique to the terminal device 10 is stored, and for example, includes a SIM card storing identification information for a subscriber in mobile communications. The data stored in the SIM card may be stored in the storage unit 12 by using the eSIM standard. The data stored by means of the eSIM standard or on a SIM card, which is a portion of the storage unit 12, includes master secret data (a unique key) that serves as input data to a key derivation function for deriving an authenticated encryption key to be described below.

Additionally, the storage unit 12 also stores a key derivation function for deriving the authenticated encryption key mentioned above. The master secret data and the key derivation function are used to derive authenticated ciphertext used for the authentication process between the terminal device 10 and the base station 20 to be described below.

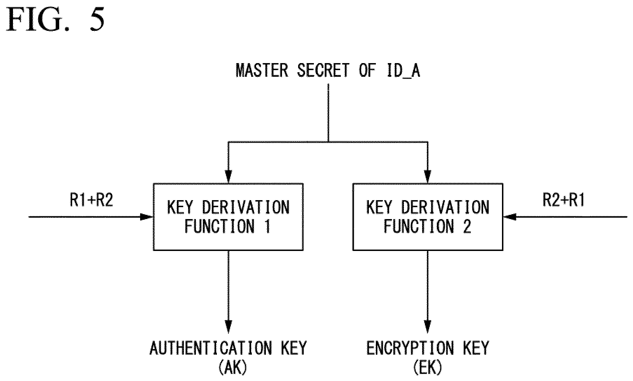

FIG. 5 schematically illustrates the process for using a prescribed key derivation function (KDF) to derive an authentication key (AK) and an encryption key (EK) for an authenticated encryption process.

This key derivation function is a function that takes, as inputs, multiple parameters including at least one secret parameter, and that provides, as an output, a key that is suitable for a prescribed algorithm or application (see, for example, ISO/IEC 11770-6:2016). In the present embodiment, the authentication key (AK) and the encryption key (EK) for authenticated encryption processing used as a cryptographic primitive is configured to be derived by using a key derivation function called Rocca. Regarding Rocca, see, for example, Kosei Sakamoto, Fukang Liu, Yuto Nakano, Shinsaku Kiyomoto, Takanori Isobe, "Rocca: An Efficient AES-based Encryption Scheme for Beyond 5G", Transactions on Symmetric Cryptology, ISSN 2519-173X, Vol. 2021, No. 2, pp. 1-30.

Specifically, as illustrated in FIG. 5, computations are performed by a key derivation function KDF taking, as an input, master secret data, which is a unique key shared by the terminal device 10 and the authentication server 30 through identification information for the terminal device 10, and using different combinations of a random number R1 generated by the terminal device 10 and a random number R2 generated by the authentication server 30 (in the example in FIG. 5, a parameter prepared by coupling the random number R2 to the end of the random number R1 and a parameter prepared by coupling the random number R1 to the end of the random number R2) as keys. Two mutually different outputs are respectively used as an authentication key (AK) and an encryption key (EK) for an authenticated encryption process. As a cryptographic primitive allowing the authentication key (AK) and the encryption key (EK) that have been obtained to be used for secure communication between the terminal device 10 and the base station 20, authenticated ciphertext can be used.

As the authenticated encryption scheme, any one of encrypt-then-MAC (EtM), Encrypt- and-MAC (E&M) and MAC-then-Encrypt (MtE) may be used.

In the present embodiment, two different keys, i.e., an authentication key (AK) and an encryption key (EK), are derived. However, there may be only one type of parameter used as a key for the key derivation function, and the authenticated encryption process may be executed with a single key.

Additionally, regarding the keys used by the key derivation function in the present embodiment, two different keys were derived by reversing the coupling order of the two random numbers R1 and R2. However, instead of changing the coupling order of the random numbers, another mutually different numerical value may be added at an appropriate position (for example, random number R2 may be coupled to random number R1, and a different numeral (for example, 0 or 1) may be appended to the beginning thereof.

The communication unit 13 is a communication module for digital wireless communication configured as an integrated circuit component including, for example, various types of passive devices for processing RF waves, and a processor for amplifying and processing signals, etc., the communication unit 13 performing data processing for wireless communication with the base station 20.

The control unit 11 is provided with an authentication request unit 111, an authenticated encryption key derivation unit 112, and a response processing unit 113.

The authentication request unit 111 generates a first random number R1 and transmits the first random number R1, together with identification information for itself, to the base station 20, as an authentication request. The authenticated encryption key derivation unit 112 receives, from the base station 20, a response request including a second random number R2 generated by the authentication server 30 and authenticated ciphertext obtained by authenticated encryption of the first random number R1 and the second random number R2, and calculates an authenticated encryption key based on the first random number R1, the second random number R2, and master secret data held by itself. The response processing unit 113 performs authenticated encryption of the second random number R2 by means of the authenticated encryption key calculated by the authenticated encryption key derivation unit 112, and returns a response including the authenticated ciphertext to the base station 20.

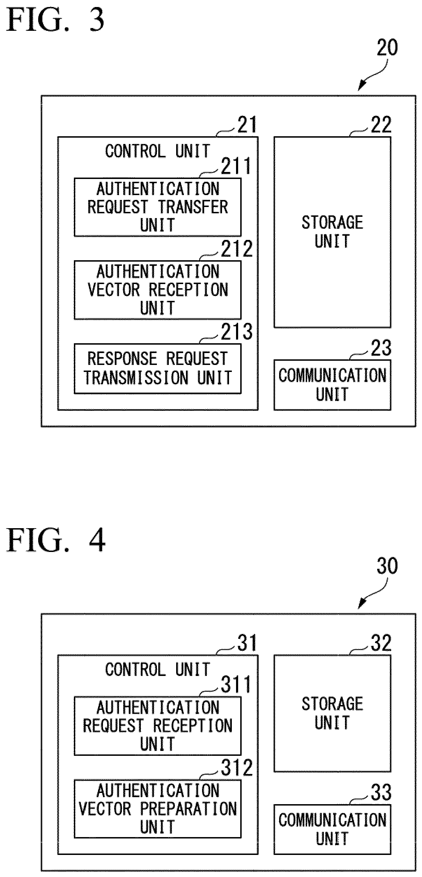

Next, the base station 20 in the present embodiment will be explained. FIG. 3 illustrates an example of the functional configuration of the base station 20 according to the present embodiment.

The base station 20 is a server having communication functions, or an information processing device (computer), such as a personal computer, provided with a control unit 21, a storage unit 22, and a communication unit 23, as well as input/output devices, etc. for various types of data.

The control unit 21 is a portion that controls the base station 20 overall, and that realizes the respective functions of the base station 20 in the present embodiment by appropriately reading out and executing various programs stored in the storage unit 22. The control unit 21 may be a processor such as a CPU.

The storage unit 22 is a storage area for various types of data, various types of programs for making a hardware group function as the base station 20, etc., and may be a ROM, a RAM, a flash memory, a semiconductor (SSD), a hard disk (HDD), etc. Specifically, the storage unit 22 stores programs for making the control unit 21 execute the respective functions of the present embodiment, various parameters, data input from the terminal device 10 and the authentication server 30 to be described below, etc., various types of data generated by the respective functional units to be described below, etc.

The communication unit 23 is a communication module for digital wireless communication configured as an integrated circuit component including, for example, various types of passive devices for processing RF waves, and a processor for amplifying and processing signals, etc. The communication unit 23 performs data processing for wireless or wired communication between the control unit 21 and the network 40.

The control unit 21 is provided with an authentication request transfer unit 211, an authentication vector reception unit 212, and a response request transmission unit 213.

The authentication request transfer unit 211 receives, from the terminal device 10, an authentication request including a first random number R1 and identification information for the terminal device 10, and transmits the authentication request to the authentication server 30. The authentication vector reception unit 212 receives, from the authentication server 30, an authentication vector including a second random number R2 generated by the authentication server 30, authenticated ciphertext obtained by authenticated encryption of the first random number R1 and the second random number R2, authenticated ciphertext obtained by authenticated encryption of the second random number R2, and an authenticated encryption key. The response request transmission unit 213 transmits, to the terminal device 10, a response request including the second random number R2, and the authenticated ciphertext obtained by authenticated encryption of the first random number R1 and the second random number R2.

Next, the authentication server 30 in the present embodiment will be explained. FIG. 4 illustrates an example of the functional configuration of the authentication server 30 according to the present embodiment.

The authentication server 30 is a server having communication functions, or an information processing device (computer), such as a personal computer, provided with a control unit 31, a storage unit 32, and a communication unit 33, as well as input/output devices, etc. for various types of data.

The control unit 31 is a portion that controls the authentication server 30 overall, and that realizes the respective functions of the authentication server 30 in the present embodiment by appropriately reading out and executing various programs stored in the storage unit 32. The control unit 31 may be a processor such as a CPU.

The storage unit 32 is a storage area for various types of data, various types of programs for making a hardware group function as the authentication server 30, etc., and may be a ROM, a RAM, a flash memory, a semiconductor (SSD), a hard disk (HDD), etc. Specifically, the storage unit 32 stores programs for making the control unit 31 execute the respective functions of the present embodiment, various parameters, data input from the base station 20, etc., various types of data generated by the respective functional units to be described below, etc. The storage unit 32 also stores, in association with identification information unique to the terminal devices 10, master secret data that is to be input to key derivation functions for deriving authenticated encryption keys, and that is shared with the respective terminal devices 10.

The communication unit 33 is a communication module for digital wireless communication configured as an integrated circuit component including, for example, various types of passive devices for processing RF waves, and a processor for amplifying and processing signals, etc. The communication unit 33 performs data processing for wireless or wired communication between the control unit 31 and the network 40.

The control unit 31 is provided with an authentication request reception unit 311 and an authentication vector preparation unit 312.

The authentication request reception unit 311 receives, from the base station 20, an authentication request for the terminal device 10. The authentication vector preparation unit 312 generates a second random number R2. The authentication vector preparation unit 312 calculates an authenticated encryption key based on the first random number R1, the second random number R2, and the master secret data associated with identification information obtained from the authentication request for the terminal device 10. The authentication vector preparation unit 312 uses the authenticated encryption key to generate an authentication vector by calculating authenticated ciphertext obtained by authenticated encryption of the first random number R1 and the second random number R2, and authenticated ciphertext obtained by authenticated encryption of the second random number R2, and transmits the authentication vector to the base station 20.

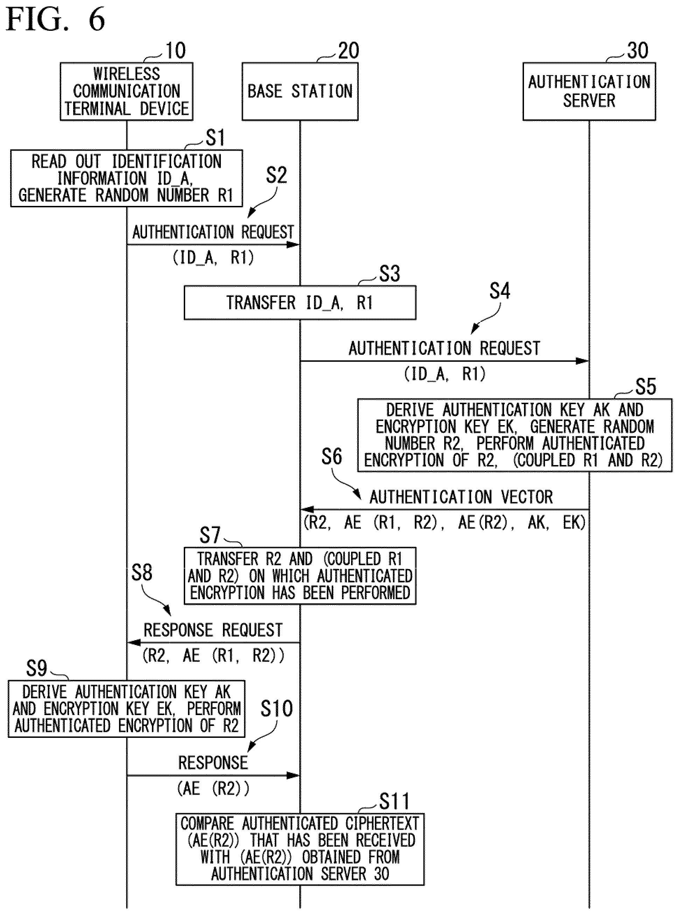

Next, the processing in the authentication process between the terminal device 10 and the base station 20 in the authentication and key sharing system according to the present embodiment will be explained. FIG. 6 is a sequence diagram indicating the data processing between the terminal device 10, the base station 20, and the authentication server 30 in the mobile communication system for the authentication and key sharing process in the authentication and key sharing system of the present embodiment. In the explanation below, the various types of data transmitted and received between the terminal device 10, the base station 20, and the authentication server 30 will be denoted by the same reference numbers as those in FIG. 6.

When the terminal device 10 commences wireless communication with the base station 20, in step S1, the authentication request unit 111 in the terminal device 10 generates a first random number (R1). Additionally, the authentication request unit 111 reads its own identification information (ID_A) from the storage unit 12, and generates an authentication request including the first random number (R1) and the identification information (ID_A).

In step S2, the authentication request unit 111 transmits the generated authentication request (ID_A, R1) to the base station 20 through the communication unit 13.

In step S3, the authentication request transfer unit 211 in the base station 20 receives the authentication request (ID_A, R1) received from the terminal device 10 through the communication unit 23.

In step S4, the authentication request transfer unit 211 in the base station 20 transmits the received authentication request (ID_A, R1) to the authentication server 30.

In step S5, the authentication request reception unit 311 in the authentication server 30 receives from the base station 20, through the communication unit 33, the authentication request (ID_A, R1) including the first random number (R1) and the identification information (ID_A) of the terminal device 10. The authentication vector preparation unit 312 in the authentication server 30 generates a second random number (R2). Next, the authentication vector preparation unit 312 calculates a (first) authenticated encryption key (AK, EK) based on the first random number (R1), the second random number (R2), and the master secret data associated with the identification information (ID_A). Then, the authentication vector preparation unit 312 uses the authenticated encryption key (AK, EK) that has been derived to calculate authenticated ciphertext (AE (R1, R2)) obtained by authenticated encryption of the first random number (R1) and the second random number (R2), and authenticated ciphertext (AE (R2)) obtained by authenticated encryption of the second random number (R2). As a result thereof, the authentication vector preparation unit 312 generates an authentication vector (R2, AE (R1, R2), AE (R2), AK, EK) including the second random number (R2), the authenticated ciphertext (AE (R1, R2)) and (AE (R2)), as well as the authenticated encryption key (AK, EK).

In step S6, the authentication vector preparation unit 312 in the authentication server 30 transmits the authentication vector (R2, AE (R1, R2), AE (R2), AK, EK) that has been generated to the base station 20 through the communication unit 33.

In step S7, the authentication vector reception unit 212 in the base station 20 receives the authentication vector transmitted by the authentication server 30 through the communication unit 23.

In step S8, the response request transmission unit 213 in the base station 20 transmits to the terminal device 10, through the communication unit 23, a response request (R2, AE (R1, R2)) including the second random number (R2) and the authenticated ciphertext (AE (R1, R2)) included in the authentication vector (R2, AE (R1, R2), AE (R2), AK, EK) that has been received.

In step S9, the authenticated encryption key derivation unit 112 in the terminal device 10 receives the response request (R2, AE (R1, R2)) including the second random number (R2) and the authenticated ciphertext (AE (R1, R2)) received from the base station 20. Next, the authenticated encryption key derivation unit 112 uses the first random number (R1) generated and held by itself, the second random number (R2) that has been received, and the master secret data stored by itself to calculate a (second) authenticated encryption key (AK, EK). Then, the response processing unit 113 in the terminal device 10 performs authenticated encryption on the second random number (R2) by means of the authenticated encryption key (AK, EK) calculated by the authenticated encryption key derivation unit 112, and generates a response (AE (R2)) including the authenticated ciphertext (AE (R2)).

In step S10, the response processing unit 113 in the terminal device 10 transmits the authenticated ciphertext (AE (R2)) that has been generated to the base station 20 through the communication unit 13. In step S11, the base station 20 compares the authenticated ciphertext (AE (R2)) received from the terminal device 10 with the authenticated ciphertext (AE (R2)) that was received from the authentication server 30 in step S7 and held. In the case in which there is a match therebetween, the terminal device 10 is determined to have been authenticated, and wireless communication with the terminal device 10 is thereafter continued.

As described above, according to the authentication and key sharing system in the present embodiment, by using authenticated encryption as a primitive, authentication, encryption, and key derivation (key sharing) between the terminal device 10 and the base station 20 can be implemented in a single stage. As a result thereof, the safety of the authentication and key sharing system can be improved while also making the protocol more efficient. Additionally, the mounting area for a chip used to execute the protocol can be reduced, and the application for executing the protocol can be simplified. Additionally, by using authenticated encryption as a cryptographic primitive, encryption and message authentication can be realized simultaneously in the authentication and key sharing process.

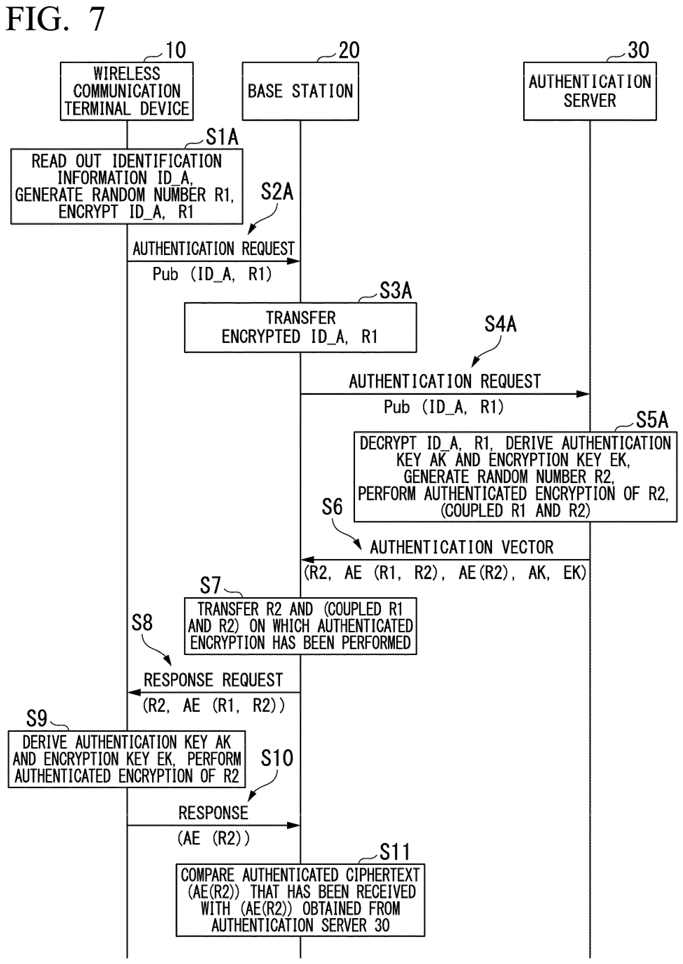

Next, a modified example of the authentication and key sharing system according to the present embodiment will be explained. FIG. 7 indicates a sequence diagram, corresponding to FIG. 6, according to the modified example. In FIG. 7, the processing steps corresponding to the processing steps in FIG. 6 are denoted by the same reference numbers.

The authentication and key sharing process according to the modified example differs in that, when commencing wireless communication between the terminal device 10 and the base station 20, a message transmitted from the terminal device 10 is encrypted. The message transmitted from the terminal device 10 to the base station 20 is encrypted by a public key encryption scheme and can be decrypted by the authentication server 30, which holds, in advance, a private key for decryption.

Referring to FIG. 7, in step S1A, an authentication request unit 111 in the terminal device 10 generates an authentication request (ID_A, R1) including a first random number (R1) and identification information (ID_A), and generates ciphertext (Pub(ID_A, R1)) by encrypting the authentication request with a public key. This ciphertext (Pub(ID_A, R1)) is received by the authentication server 30 by using the processing steps from step S2A to step S5A. In the authentication server 30, the ciphertext (Pub(ID_A, R1)) received by the authentication request reception unit 311 is decrypted with the held private key. Thereafter, the same process as that in the sequence diagram of FIG. 6 is performed.

Due to this modified example, in addition to the effects achieved by the authentication and key sharing system according to the present embodiment described above, since the message including the identification information (ID_A) transmitted from the terminal device 10 is encrypted, there is no risk that the identification information (ID_A) could become known to a third party due to eavesdropping, thereby further increasing the security level.

The authenticated encryption key derivation unit 112 may derive a key for authentication and a key for encryption based on the first random number R1, the second random number R2, and the unique key by using two different key derivation functions.

In this way, since different keys are used for authentication and encryption, the safety of communication can be further increased.

The authenticated encryption key derivation unit 112 may generate the authenticated encryption key based on the first random number R1, the second random number R2, and the unique key by using one key derivation function.

In this way, the load required for the authenticated encryption key derivation process can be reduced.

The authenticated encryption key derivation unit 112 may determine the validity of a calculated authenticated encryption key based on authenticated ciphertext obtained by authenticated encryption of the first random number R1 and the second random number R2 included in the response request received from the base station 20.

In this way, since the validity of the authenticated encryption key is ensured, the safety of communication between the terminal device 10 and the base station 20 is improved.

Due to the embodiment described above, by using authenticated encryption as a primitive, for example, the safety of communication over a network can be improved and the protocol can be made more efficient. Additionally, the mounting area for a chip used to execute the protocol can be reduced, and the application for executing the protocol can be simplified. Therefore, it is possible to contribute to Goal 9, "Build resilient infrastructure, promote inclusive and sustainable industrialization and foster innovation", in the sustainable development goals (SDGs) set out by the United Nations.

While embodiments of the present invention have been explained above, the present invention is not limited to the embodiments described above. Additionally, the effects described in the embodiments explained above are merely a listing of the most favorable effects occurring due to the present invention, and the effects due to the present invention are not limited to those described in the embodiments.

The authentication and key sharing method according to the present embodiment is realized by means of software. In the case of implementation by means of software, programs constituting the software are installed in an information processing device (computer). Additionally, these programs may be recorded on removable media such as a CD-ROM and distributed to users, or they may be distributed by being downloaded to the computers of users over a network. Furthermore, these programs may be provided to the computers of users as web services over a network without being downloaded.

### [Reference Signs List]

- 10: Wireless communication terminal device
- 11: Control unit
- 111: Authentication request unit
- 112: Authenticated encryption key derivation unit
- 113: Response processing unit
- 12: Storage unit
- 13: Communication unit
- 20: Base station
- 21: Control unit
- 211: Authentication request transfer unit
- 212: Authentication vector reception unit
- 213: Response request transmission unit
- 22: Storage unit
- 23: Communication unit
- 30: Authentication server
- 31: Control unit
- 311: Authentication request reception unit
- 312: Authentication vector preparation unit
- 32: Storage unit
- 33: Communication unit
- 40: Network

## Claims

1. A wireless communication terminal device (10) comprising a control unit (11), a storage unit (12) that stores a unique key shared with an authentication server (30), and a communication unit (13), wherein the control unit (11) comprises:
an authentication request unit (111) that is configured to generate a first random number (R1), and that transmits to a base station (20), through the communication unit (13), an authentication request including the first random number (R1) and identification information, associated with the unique key, for the wireless communication terminal device (10);
an authenticated encryption key derivation unit that receives a response request from the base station (20), which has acquired a second random number (R2) generated by the authentication server (30) that has received the authentication request from the base station (20), first authenticated ciphertext obtained by authenticated encryption of the first random number (R1) and the second random number (R2), second authenticated ciphertext obtained by authenticated encryption of the second random number (R2), and a first authenticated encryption key, calculated by the authentication server (30), based on the first random number (R1), the second random number (R2), and the unique key, wherein the first authenticated encryption key is used to calculate the first authenticated ciphertext and the second authenticated ciphertext, the response request including the second random number (R2) and the first authenticated ciphertext, and that calculates a second authenticated encryption key based on the first random number (R1), the second random number (R2), and the unique key; and
a response processing unit (113) that returns, in response to said response request, to the base station, (20) through the communication unit (13), a response including third authenticated ciphertext obtained by authenticated encryption of the second random number (R2) using the second authenticated encryption key calculated by the authenticated encryption key derivation unit.

2. The wireless communication terminal device (10) according to claim 1, wherein the authentication request unit (111) transmits to the base station (20), through the communication unit (13), an authentication request obtained by encrypting the first random number (R1) and the identification information for the wireless communication terminal device (10) by using a public key of the wireless communication terminal device (10).

3. The wireless communication terminal device (10) according to claim 1 or claim 2, wherein the authenticated encryption key derivation unit derives a key for authentication and a key for encryption, based on the first random number (R1), the second random number (R2), and the unique key, using two different key derivation functions.

4. The wireless communication terminal device (10) according to claim 1 or claim 2, wherein the authenticated encryption key derivation unit derives the second authenticated encryption key, based on the first random number (R1), the second random number (R2), and the unique key, using a single key derivation function.

5. The wireless communication terminal device (10) according to any one of claim 1 to claim 4, wherein the authenticated encryption key derivation unit determines a validity of the second authenticated encryption key based on the first authenticated ciphertext included in the response request received from the base station (20).

6. An authentication and key sharing method wherein a wireless communication terminal device (10) comprising a control unit (11), a storage unit (12) that stores a unique key shared with an authentication server (30), and a communication unit (13), executes:
an authentication request step of generating a first random number (R1), and of transmitting to a base station (20), through the communication unit (13), an authentication request including the first random number (R1) and identification information, associated with the unique key, for the wireless communication terminal device (10);
an authenticated encryption key derivation step of receiving a response request from the base station (20), which has acquired a second random number (R2) generated by the authentication server (30) that has received the authentication request from the base station (20), first authenticated ciphertext obtained by authenticated encryption of the first random number (R1) and the second random number (R2), second authenticated ciphertext obtained by authenticated encryption of the second random number (R2), and a first authenticated encryption key, calculated by the authentication server (30), based on the first random number (R1), the second random number (R2), and the unique key, wherein the first authenticated encryption key is used to calculate the first authenticated ciphertext and the second authenticated ciphertext, the response request including the second random number (R2) and the first authenticated ciphertext, and of calculating a second authenticated encryption key based on the first random number (R1), the second random number (R2), and the unique key; and
a response processing step of returning, in response to said response request, to the base station (20), through the communication unit (13), a response including third authenticated ciphertext obtained by authenticated encryption of the second random number (R2) using the second authenticated encryption key calculated in the authenticated encryption key derivation step.

7. A program, which when executed by a computer, causes the computer to function as the wireless communication terminal device (10) according to any one of claim 1 to claim 5.

8. An authentication and key sharing system including a wireless communication terminal device (10), a base station (20), and an authentication server (30), wherein
the wireless communication terminal device (10) comprises a terminal device control unit (11), a storage unit (12) that stores a unique key shared with the authentication server (30), and a terminal device communication unit (13),
the terminal device control unit (11) comprising
an authentication request unit (111) that generates a first random number (R1), and that transmits to the base station (20), through the terminal device communication unit (13), an authentication request including the first random number (R1) and identification information, associated with the unique key, for the wireless communication terminal device (10),
an authenticated encryption key derivation unit that receives a response request from the base station (20), which has acquired a second random number (R2) generated by the authentication server (30) that has received the authentication request from the base station (20), first authenticated ciphertext obtained by authenticated encryption of the first random number (R1) and the second random number (R2), second authenticated ciphertext obtained by authenticated encryption of the second random number (R2), and a first authenticated encryption key, calculated by the authentication server (30), based on the first random number (R1), the second random number (R2), and the unique key, wherein the first authenticated encryption key is used to calculate the first authenticated ciphertext and the second authenticated ciphertext, the response request including the second random number (R2) and the first authenticated ciphertext, and that calculates a second authenticated encryption key based on the first random number (R1), the second random number (R2), and the unique key, and
a response processing unit (113) that returns, in response to said response request, to the base station (20), through the terminal device communication unit, a response including a third authenticated ciphertext obtained by authenticated encryption of the second random number (R2) using the second authenticated encryption key calculated by the authenticated encryption key derivation unit;
the base station (20) comprises a base station control unit (21) and a base station communication unit (23),
the base station control unit (21) comprising
an authentication request transfer unit (211) that receives from the wireless communication terminal device (10), through the base station communication unit (23), the authentication request including the first random number (R1) and the identification information for the wireless communication terminal device (10), and that transmits the authentication request that has been received to the authentication server (30),
an authentication vector reception unit (212) that receives from the authentication server (30), through the base station communication unit (23), an authentication vector including the second random number (R2) generated by the authentication server (30), first authenticated ciphertext obtained by authenticated encryption of the first random number (R1) and the second random number (R2), second authenticated ciphertext obtained by authenticated encryption of the second random number (R2), and a first authenticated encryption key, and
a response request transmission unit (213) that transmits to the wireless communication terminal device (10), through the base station communication unit (23), a response request including the second random number (R2) and the first authenticated ciphertext included in the authentication vector; and
the authentication server (30) comprises an authentication server control unit and an authentication server communication unit (33),
the authentication server control unit comprising
an authentication request reception unit (311) that receives from the base station (20), through the authentication server communication unit (33), the authentication request including the first random number (R1) and identification information for the wireless communication terminal device (10), and
an authentication vector preparation unit (312) that generates the second random number (R2), that generates the authentication vector by calculating the first authenticated encryption key based on the first random number (R1), the second random number (R2), and the unique key, by calculating the first authenticated ciphertext obtained by authenticated encryption of the first random number (R1) and the second random number (R2), and by calculating the second authenticated ciphertext obtained by authenticated encryption of the second random number (R2), and that transmits the authentication vector to the base station (20) through the authentication server communication unit (33).

9. The authentication and key sharing system according to claim 8, wherein:
the authentication request unit (111) transmits to the base station (20), through the terminal device communication unit, an authentication request obtained by encrypting the first random number (R1) and the identification information for the wireless communication terminal device (10) by using a public key of the wireless communication terminal device (10);
the authentication request transfer unit (211) transmits the authentication request to the authentication server (30); and
the authentication request reception unit (311) receives the authentication request through the authentication server communication unit (33), and acquires the first random number (R1) and the identification information for the wireless communication terminal device (10) by decrypting the authentication request by using a private key.

10. A base station (20) comprising:
base station communication unit (23) which communicates with a wireless communication terminal device (10) and an authentication server (30), wherein the authentication server (30) and the wireless communication terminal device (10) are configured to share a unique key; and
a base station control unit (21) comprising
an authentication request transfer unit (211) that receives from the wireless communication terminal device (10), through the base station communication unit (23), an authentication request including a first random number (R1) and identification information, associated with the unique key, for the wireless communication terminal device (10), and that transmits the authentication request that has been received to the authentication server (30),
an authentication vector reception unit (212) that
receives from the authentication server (30), through the base station communication unit (23), an authentication vector including a second random number (R2) generated by the authentication server (30), first authenticated ciphertext obtained by authenticated encryption of the first random number (R1) and the second random number (R2), second authenticated ciphertext obtained by authenticated encryption of the second random number (R2), and a first authenticated encryption key, calculated by the authentication server (30), based on the first random number (R1), the second random number (R2), and the unique key, wherein the first authenticated encryption key is used to calculate the first authenticated ciphertext and the second authenticated ciphertext, and
a response request transmission unit (213) that transmits to the wireless communication terminal device (10), through the base station communication unit (23), a response request including the second random number (R2) and the first authenticated ciphertext included in the authentication vector,
the base station is further configured to receive, in response to said response request, from the wireless communication terminal device, a response including a third authenticated ciphertext calculated by the wireless communication terminal,
wherein a second authenticated encryption key is calculated, by the wireless communication terminal device, based on the first random number, the second random number, and the unique key in response to receiving the response request from the response request transmission unit, and
the third authenticated encryption ciphertext is generated, by the wireless communication terminal device, by authenticated encryption of the second random number using the second authenticated encryption key.

## Patentansprüche

1. Drahtloses Kommunikationsendgerät (10), welches eine Steuereinheit (11), eine Speichereinheit (12), die einen eindeutigen Schlüssel speichert, der mit einem Authentifizierungsserver (30) geteilt wird, und eine Kommunikationseinheit (13) aufweist, wobei die Steuereinheit (11) aufweist:
eine Authentifizierungsanforderungseinheit (111), die ausgestaltet ist, um eine erste Zufallszahl (R1) zu erzeugen und über die Kommunikationseinheit (13) eine Authentifizierungsanforderung an eine Basisstation (20) zu übertragen, die die erste Zufallszahl (R1) sowie Identifikationsinformationen enthält, die dem eindeutigen Schlüssel für das drahtlose Kommunikationsendgerät (10) zugeordnet sind,
eine Einheit zur Ableitung eines authentifizierten Verschlüsselungsschlüssels, die eine Antwortanforderung von der Basisstation (20), die eine zweite Zufallszahl (R2) erfasst hat, die von dem Authentifizierungsserver (30) erzeugt worden ist, der die Authentifizierungsanforderung von der Basisstation (20) empfangen hat, einen ersten authentifizierten Chiffretext, der durch eine authentifizierte Verschlüsselung der ersten Zufallszahl (R1) und der zweiten Zufallszahl (R2) erhalten worden ist, einen zweiten authentifizierten Chiffretext, der durch eine authentifizierte Verschlüsselung der zweiten Zufallszahl (R2) erhalten worden ist, sowie einen ersten authentifizierten Verschlüsselungsschlüssel empfängt, der von dem Authentifizierungsserver (30) auf der Grundlage der ersten Zufallszahl (R1), der zweiten Zufallszahl (R2) und den eindeutigen Schlüssel berechnet worden ist, wobei der erste authentifizierte Verschlüsselungsschlüssel zur Berechnung des ersten authentifizierten Chiffretextes und des zweiten authentifizierten Chiffretextes verwendet wird, wobei die Antwortanforderung die zweite Zufallszahl (R2) und den ersten authentifizierten Chiffretext enthält, und die auf der Grundlage der ersten Zufallszahl (R1), der zweiten Zufallszahl (R2) und des eindeutigen Schlüssels einen zweiten authentifizierten Verschlüsselungsschlüssel berechnet, sowie
eine Antwortbearbeitungseinheit (113), die als Antwort auf die genannte Antwortanforderung über die Kommunikationseinheit (13) an die Basisstation (20) eine Antwort zurücksendet, die einen dritten authentifizierten Chiffretext enthält, der durch eine authentifizierte Verschlüsselung der zweiten Zufallszahl (R2) mittels des von der Einheit zur Ableitung des authentifizierten Verschlüsselungsschlüssels berechneten zweiten authentifizierten Verschlüsselungsschlüssels erhalten worden ist.

2. Drahtloses Kommunikationsendgerät (10) nach Anspruch 1, wobei die Authentifizierungsanforderungseinheit (111) über die Kommunikationseinheit (13) eine Authentifizierungsanforderung an die Basisstation (20) überträgt, die durch eine Verschlüsselung der ersten Zufallszahl (R1) und der Identifikationsinformationen für das drahtlose Kommunikationsendgerät (10) mittels eines öffentlichen Schlüssels des drahtlosen Kommunikationsendgeräts (10) erhalten worden ist.

3. Drahtloses Kommunikationsendgerät (10) nach Anspruch 1 oder Anspruch 2, wobei die Einheit zur Ableitung des authentifizierten Verschlüsselungsschlüssels auf der Grundlage der ersten Zufallszahl (R1), der zweiten Zufallszahl (R2) und des eindeutigen Schlüssels mittels von zwei verschiedenen Schlüsselableitungsfunktionen einen Schlüssel zur Authentifizierung und einen Schlüssel zur Verschlüsselung ableitet.

4. Drahtloses Kommunikationsendgerät (10) nach Anspruch 1 oder Anspruch 2, wobei die Einheit zur Ableitung des authentifizierten Verschlüsselungsschlüssels den zweiten authentifizierten Verschlüsselungsschlüssel auf der Grundlage der ersten Zufallszahl (R1), der zweiten Zufallszahl (R2) und des eindeutigen Schlüssels mittels einer einzigen Ableitungsfunktion eines Schlüssels ableitet.

5. Drahtloses Kommunikationsendgerät (10) nach einem der Ansprüche 1 bis 4, wobei die Einheit zur Ableitung des authentifizierten Verschlüsselungsschlüssels die Gültigkeit des zweiten authentifizierten Verschlüsselungsschlüssels auf der Grundlage des ersten authentifizierten Chiffretextes bestimmt, der in der von der Basisstation (20) empfangenen Antwortanforderung enthalten ist.

6. Verfahren zur Authentifizierung und Schlüsselweitergabe, bei dem ein drahtloses Kommunikationsendgerät (10), das eine Steuereinheit (11), eine Speichereinheit (12), die einen mit einem Authentifizierungsserver (30) gemeinsam genutzten eindeutigen Schlüssel speichert, und eine Kommunikationseinheit (13) aufweist, welches ausführt:
einen Schritt zur Authentifizierungsanforderung, bei dem eine erste Zufallszahl (R1) erzeugt wird und über die Kommunikationseinheit (13) eine Authentifizierungsanforderung an eine Basisstation (20) gesendet wird, die die erste Zufallszahl (R1) sowie Identifikationsinformationen enthält, die dem eindeutigen Schlüssel für das drahtlose Kommunikationsendgerät (10) zugeordnet sind,
einen Schritt zur Ableitung eines authentifizierten Verschlüsselungsschlüssels, bei dem eine Antwortanforderung von der Basisstation (20), die eine zweite Zufallszahl (R2) erfasst hat, die von dem Authentifizierungsserver (30) erzeugt worden ist, der die Authentifizierungsanforderung von der Basisstation (20), ein erster authentifizierter Chiffretext, der durch eine authentifizierte Verschlüsselung der ersten Zufallszahl (R1) und der zweiten Zufallszahl (R2) erhalten worden ist, ein zweiter authentifizierter Chiffretext, der durch eine authentifizierte Verschlüsselung der zweiten Zufallszahl (R2) erhalten worden ist, sowie ein erster authentifizierter Verschlüsselungsschlüssel empfangen wird, der von dem Authentifizierungsserver (30) auf der Grundlage der ersten Zufallszahl (R1), der zweiten Zufallszahl (R2) und des eindeutigen Schlüssels berechnet worden ist, wobei der erste authentifizierte Verschlüsselungsschlüssel zur Berechnung des ersten authentifizierten Chiffretextes und des zweiten authentifizierten Chiffretextes verwendet wird, wobei die Antwortanforderung die zweite Zufallszahl (R2) und den ersten authentifizierten Chiffretext, sowie zur Berechnung eines zweiten authentifizierten Verschlüsselungsschlüssels auf der Grundlage der ersten Zufallszahl (R1), der zweiten Zufallszahl (R2) und des eindeutigen Schlüssels, und
einen Schritt zur Antwortbearbeitung, bei dem als Antwort auf die genannte Antwortanforderung über die Kommunikationseinheit (13) eine Antwort an die Basisstation (20) zurückgesendet wird, die einen dritten authentifizierten Chiffretext enthält, der durch eine authentifizierte Verschlüsselung der zweiten Zufallszahl (R2) mittels des in dem Schritt zur Ableitung des authentifizierten Verschlüsselungsschlüssels berechneten zweiten authentifizierten Verschlüsselungsschlüssels erhalten worden ist.

7. Programm, das bei Ausführung durch einen Computer bewirkt, dass der Computer als das drahtlose Kommunikationsendgerät (10) gemäß einem der Ansprüche 1 bis 5 arbeitet.

8. System zur Authentifizierung und Schlüsselverteilung, welches ein drahtloses Kommunikationsendgerät (10), eine Basisstation (20) und einen Authentifizierungsserver (30) aufweist, wobei
das drahtlose Kommunikationsendgerät (10) eine Endgerät-Steuereinheit (11), eine Speichereinheit (12), die einen mit dem Authentifizierungsserver (30) gemeinsam genutzten eindeutigen Schlüssel speichert, und eine Endgerät-Kommunikationseinheit (13) aufweist,
wobei die Endgerät-Steuereinheit (11) aufweist:
eine Authentifizierungsanforderungseinheit (111), die eine erste Zufallszahl (R1) erzeugt und die über die Endgerät-Kommunikationseinheit (13) eine Authentifizierungsanforderung an die Basisstation (20) überträgt, die die erste Zufallszahl (R1) sowie Identifikationsinformationen enthält, die dem eindeutigen Schlüssel für das drahtlose Kommunikationsendgerät (10) zugeordnet sind,
eine Einheit zur Ableitung für authentifizierte Verschlüsselungsschlüssel, die eine Antwortanforderung von der Basisstation (20), die eine zweite Zufallszahl (R2) erfasst hat, die von dem Authentifizierungsserver (30) erzeugt worden ist, der die Authentifizierungsanforderung von der Basisstation (20) empfangen hat, einen ersten authentifizierten Chiffretext, der durch eine authentifizierte Verschlüsselung der ersten Zufallszahl (R1) und der zweiten Zufallszahl (R2) erhalten worden ist, einen zweiten authentifizierten Chiffretext, der durch eine authentifizierte Verschlüsselung der zweiten Zufallszahl (R2) erhalten worden ist, sowie einen ersten authentifizierten Verschlüsselungsschlüssel empfängt, der von dem Authentifizierungsserver (30) auf der Grundlage der ersten Zufallszahl (R1), der zweiten Zufallszahl (R2) und des eindeutigen Schlüssels berechnet worden ist, wobei der erste authentifizierte Verschlüsselungsschlüssel zur Berechnung des ersten authentifizierten Chiffretextes und des zweiten authentifizierten Chiffretextes verwendet wird, wobei die Antwortanforderung die zweite Zufallszahl (R2) und den ersten authentifizierten Chiffretext enthält, und die auf der Grundlage der ersten Zufallszahl (R1), der zweiten Zufallszahl (R2) und des eindeutigen Schlüssels einen zweiten authentifizierten Verschlüsselungsschlüssel berechnet, und
eine Antwortbearbeitungseinheit (113), die als Antwort auf die genannte Antwortanforderung über die Kommunikationseinheit des Endgeräts eine Antwort an die Basisstation (20) zurücksendet, die einen dritten authentifizierten Chiffretext enthält, der durch eine authentifizierte Verschlüsselung der zweiten Zufallszahl (R2) mittels des von der Ableitungseinheit für authentifizierte Verschlüsselungsschlüssel berechneten zweiten authentifizierten Verschlüsselungsschlüssels erhalten worden ist,
wobei die Basisstation (20) eine Basisstationssteuereinheit (21) und eine Basisstationskommunikationseinheit (23) aufweist,
wobei die Basisstationssteuereinheit (21) aufweist:
eine Authentifizierungsanfrage-Weiterleitungseinheit (211), die von dem drahtlosen Kommunikationsendgerät (10) über die Basisstationskommunikationseinheit (23) die Authentifizierungsanfrage empfängt, die die erste Zufallszahl (R1) und die Identifikationsinformationen für das drahtlose Kommunikationsendgerät (10) enthält, und die die empfangene Authentifizierungsanfrage an den Authentifizierungsserver (30) überträgt,
eine Authentifizierungsvektor-Empfangseinheit (212), die von dem Authentifizierungsserver (30) über die Basisstationskommunikationseinheit (23) einen Authentifizierungsvektor, der die von dem Authentifizierungsserver (30) erzeugte zweite Zufallszahl (R2), einen ersten authentifizierten Chiffretext, der durch eine authentifizierte Verschlüsselung der ersten Zufallszahl (R1) und der zweiten Zufallszahl (R2) erhalten worden ist, einen zweiten authentifizierten Chiffretext, der durch authentifizierte Verschlüsselung der zweiten Zufallszahl (R2) erhalten worden ist, sowie einen ersten authentifizierten Verschlüsselungsschlüssel empfängt, und
eine Antwortanforderungs-Sendeeinheit (213), die über die Basisstationskommunikationseinheit (23) an das drahtlose Kommunikationsendgerät (10) eine Antwortanforderung überträgt, die die zweite Zufallszahl (R2) und den in dem Authentifizierungsvektor enthaltenen ersten authentifizierten Chiffretext enthält, und
wobei der Authentifizierungsserver (30) eine Authentifizierungsserver-Steuereinheit und eine Authentifizierungsserver-Kommunikationseinheit (33) aufweist,
wobei die Authentifizierungsserver-Steuereinheit aufweist:
eine Authentifizierungsanfrage-Empfangseinheit (311), die von der Basisstation (20) über die Authentifizierungsserver-Kommunikationseinheit (33) die Authentifizierungsanfrage empfängt, die die erste Zufallszahl (R1) und die Identifikationsinformationen für das drahtlose Kommunikationsendgerät (10) enthält, und
eine Authentifizierungsvektor-Erzeugungseinheit (312), die die zweite Zufallszahl (R2) erzeugt, die den Authentifizierungsvektor durch eine Berechnung des ersten authentifizierten Verschlüsselungsschlüssels auf der Grundlage der ersten Zufallszahl (R1), der zweiten Zufallszahl (R2) und des eindeutigen Schlüssels erzeugt, indem der erste authentifizierte Chiffretext berechnet wird, der durch eine authentifizierte Verschlüsselung der ersten Zufallszahl (R1) und der zweiten Zufallszahl (R2) erhalten worden ist, sowie indem der zweite authentifizierte Chiffretextes berechnet wird, der durch eine authentifizierte Verschlüsselung der zweiten Zufallszahl (R2) erhalten worden ist, und die den Authentifizierungsvektor über die Authentifizierungsserver-Kommunikationseinheit (33) an die Basisstation (20) überträgt.

9. System zur Authentifizierung und Schlüsselverteilung nach Anspruch 8, wobei
die Authentifizierungsanforderungseinheit (111) über die Kommunikationseinheit des Endgeräts eine Authentifizierungsanforderung an die Basisstation (20) überträgt, die durch eine Verschlüsselung der ersten Zufallszahl (R1) und der Identifikationsinformationen für das drahtlose Kommunikationsendgerät (10) mittels eines öffentlichen Schlüssels des drahtlosen Kommunikationsendgeräts (10) erhalten worden ist,
die Authentifizierungsanfrage-Übertragungseinheit (211) die Authentifizierungsanfrage an den Authentifizierungsserver (30) überträgt, und
die Authentifizierungsanfrage-Empfangseinheit (311) die Authentifizierungsanfrage über die Authentifizierungsserver-Kommunikationseinheit (33) empfängt und die erste Zufallszahl (R1) sowie die Identifikationsinformationen für das drahtlose Kommunikationsendgerät (10) durch ein Entschlüsseln der Authentifizierungsanfrage mittels eines privaten Schlüssels ermittelt.

10. Basisstation (20), welche aufweist:
eine Basisstationskommunikationseinheit (23), die mit einem drahtlosen Kommunikationsendgerät (10) und einem Authentifizierungsserver (30) kommuniziert, wobei der Authentifizierungsserver (30) und das drahtlose Kommunikationsendgerät (10) so ausgestaltet sind, dass sie einen eindeutigen Schlüssel gemeinsam nutzen, und
eine Basisstationssteuereinheit (21), die aufweist:
eine Authentifizierungsanfrage-Weiterleitungseinheit (211), die von dem drahtlosen Kommunikationsendgerät (10) über die Basisstationskommunikationseinheit (23) eine Authentifizierungsanfrage empfängt, die die erste Zufallszahl (R1) und die dem eindeutigen Schlüssel zugeordneten Identifikationsinformationen für das drahtlose Kommunikationsendgerät (10) enthält, und die die empfangene Authentifizierungsanfrage an den Authentifizierungsserver (30) überträgt,
eine Authentifizierungsvektor-Empfangseinheit (212), die von dem Authentifizierungsserver (30) über die Basisstationskommunikationseinheit (23) einen Authentifizierungsvektor empfängt, der eine von dem Authentifizierungsserver (30) erzeugte zweite Zufallszahl (R2), einen ersten authentifizierten Chiffretext, der durch authentifizierte Verschlüsselung der ersten Zufallszahl (R1) und der zweiten Zufallszahl (R2) erhalten worden ist, einen zweiten authentifizierten Chiffretext, der durch eine authentifizierte Verschlüsselung der zweiten Zufallszahl (R2) erhalten worden ist, sowie einen ersten authentifizierten Verschlüsselungsschlüssel enthält, der von dem Authentifizierungsserver (30) auf der Grundlage der ersten Zufallszahl (R1), der zweiten Zufallszahl (R2) und des eindeutigen Schlüssels berechnet worden ist, wobei der erste authentifizierte Verschlüsselungsschlüssel zur Berechnung des ersten authentifizierten Chiffretexts und des zweiten authentifizierten Chiffretexts verwendet wird, und
eine Antwortanforderungs-Sendeeinheit (213), die über die Basisstationskommunikationseinheit (23) eine Antwortanforderung an das drahtlose Kommunikationsendgerät (10) überträgt, die die zweite Zufallszahl (R2) und den im Authentifizierungsvektor enthaltenen ersten authentifizierten Chiffretext enthält,
wobei die Basisstation ferner so ausgestaltet ist, dass sie als Antwort auf die genannte Antwortanforderung von dem drahtlosen Kommunikationsendgerät eine Antwort empfängt, die einen dritten authentifizierten Chiffretext enthält, der von dem drahtlosen Kommunikationsendgerät berechnet worden ist,
wobei von dem drahtlosen Kommunikationsendgerät als Antwort auf den Empfang der Antwortanforderung von der Antwortanforderungs-Sendeeinheit ein zweiter authentifizierter Verschlüsselungsschlüssel auf der Grundlage der ersten Zufallszahl, der zweiten Zufallszahl und des eindeutigen Schlüssels berechnet wird, und der dritte authentifizierte Chiffretext von dem drahtlosen Kommunikationsendgerät durch eine authentifizierte Verschlüsselung der zweiten Zufallszahl mittels des zweiten authentifizierten Verschlüsselungsschlüssels erzeugt wird.

## Revendications

1. Dispositif terminal de communication sans fil (10) comprenant une unité de commande (11), une unité de stockage (12) qui stocke une clé unique partagée avec un serveur d'authentification (30), et une unité de communication (13), dans lequel l'unité de commande (11) comprend :
une unité de requête d'authentification (111) qui est configurée pour générer un premier nombre aléatoire (R1), et qui transmet à une station de base (20), par l'intermédiaire de l'unité de communication (13), une requête d'authentification incluant le premier nombre aléatoire (R1) et des informations d'identification, associées à la clé unique, pour le dispositif terminal de communication sans fil (10) ;
une unité de dérivation de clé de chiffrement authentifié qui reçoit une requête de réponse en provenance de la station de base (20), laquelle a acquis un second nombre aléatoire (R2) généré par le serveur d'authentification (30) ayant reçu la requête d'authentification en provenance de la station de base (20), un premier texte chiffré authentifié obtenu par chiffrement authentifié du premier nombre aléatoire (R1) et du second nombre aléatoire (R2), un deuxième texte chiffré authentifié obtenu par chiffrement authentifié du second nombre aléatoire (R2), et une première clé de chiffrement authentifié, calculée par le serveur d'authentification (30), sur la base du premier nombre aléatoire (R1), du second nombre aléatoire (R2) et de la clé unique, la première clé de chiffrement authentifié étant utilisée pour calculer le premier texte chiffré authentifié et le deuxième texte chiffré authentifié, la requête de réponse incluant le second nombre aléatoire (R2) et le premier texte chiffré authentifié, et qui calcule une seconde clé de chiffrement authentifié sur la base du premier nombre aléatoire (R1), du second nombre aléatoire (R2) et de la clé unique ; et
une unité de traitement de réponse (113) qui renvoie, en réponse à ladite requête de réponse, à la station de base (20) et par l'intermédiaire de l'unité de communication (13), une réponse incluant un troisième texte chiffré authentifié obtenu par chiffrement authentifié du second nombre aléatoire (R2) à l'aide de la seconde clé de chiffrement authentifié calculée par l'unité de dérivation de clé de chiffrement authentifié.

2. Dispositif terminal de communication sans fil (10) selon la revendication 1, dans lequel l'unité de requête d'authentification (111) transmet à la station de base (20), par l'intermédiaire de l'unité de communication (13), une requête d'authentification obtenue en chiffrant le premier nombre aléatoire (R1) et les informations d'identification pour le dispositif terminal de communication sans fil (10) à l'aide d'une clé publique du dispositif terminal de communication sans fil (10).

3. Dispositif terminal de communication sans fil (10) selon la revendication 1 ou la revendication 2, dans lequel l'unité de dérivation de clé de chiffrement authentifié dérive une clé pour l'authentification et une clé pour le chiffrement, sur la base du premier nombre aléatoire (R1), du second nombre aléatoire (R2) et de la clé unique, au moyen de deux fonctions de dérivation de clé différentes.

4. Dispositif terminal de communication sans fil (10) selon la revendication 1 ou la revendication 2, dans lequel l'unité de dérivation de clé de chiffrement authentifié dérive la seconde clé de chiffrement authentifié, sur la base du premier nombre aléatoire (R1), du second nombre aléatoire (R2) et de la clé unique, au moyen d'une seule fonction de dérivation de clé.

5. Dispositif terminal de communication sans fil (10) selon l'une quelconque des revendications 1 à 4, dans lequel l'unité de dérivation de clé de chiffrement authentifié détermine une validité de la seconde clé de chiffrement authentifié sur la base du premier texte chiffré authentifié inclus dans la requête de réponse reçue en provenance de la station de base (20).

6. Procédé d'authentification et de partage de clés dans lequel un dispositif terminal de communication sans fil (10) comprenant une unité de commande (11), une unité de stockage (12) qui stocke une clé unique partagée avec un serveur d'authentification (30), et une unité de communication (13), exécute :
une étape de requête d'authentification consistant à générer un premier nombre aléatoire (R1), et à transmettre à une station de base (20), par l'intermédiaire de l'unité de communication (13), une requête d'authentification incluant le premier nombre aléatoire (R1) et des informations d'identification, associées à la clé unique, pour le dispositif terminal de communication sans fil (10) ;
une étape de dérivation de clé de chiffrement authentifié consistant à recevoir une requête de réponse en provenance de la station de base (20), laquelle a acquis un second nombre aléatoire (R2) généré par le serveur d'authentification (30) ayant reçu la requête d'authentification en provenance de la station de base (20), un premier texte chiffré authentifié obtenu par chiffrement authentifié du premier nombre aléatoire (R1) et du second nombre aléatoire (R2), un deuxième texte chiffré authentifié obtenu par chiffrement authentifié du second nombre aléatoire (R2), et une première clé de chiffrement authentifié, calculée par le serveur d'authentification (30), sur la base du premier nombre aléatoire (R1), du second nombre aléatoire (R2) et de la clé unique, la première clé de chiffrement authentifié étant utilisée pour calculer le premier texte chiffré authentifié et le deuxième texte chiffré authentifié, la requête de réponse incluant le second nombre aléatoire (R2) et le premier texte chiffré authentifié, et consistant à calculer une seconde clé de chiffrement authentifié sur la base du premier nombre aléatoire (R1), du second nombre aléatoire (R2) et de la clé unique ; et
une étape de traitement de réponse consistant à renvoyer, en réponse à ladite requête de réponse, à la station de base (20), par l'intermédiaire de l'unité de communication (13), une réponse incluant un troisième texte chiffré authentifié obtenu par chiffrement authentifié du second nombre aléatoire (R2) à l'aide de la seconde clé de chiffrement authentifié calculée lors de l'étape de dérivation de clé de chiffrement authentifié.

7. Programme qui, lorsqu'il est exécuté par un ordinateur, amène l'ordinateur à fonctionner comme le dispositif terminal de communication sans fil (10) selon l'une quelconque des revendications 1 à 5.

8. Système d'authentification et de partage de clés incluant un dispositif terminal de communication sans fil (10), une station de base (20), et un serveur d'authentification (30), dans lequel
le dispositif terminal de communication sans fil (10) comprend une unité de commande de dispositif terminal (11), une unité de stockage (12) qui stocke une clé unique partagée avec le serveur d'authentification (30), et une unité de communication de dispositif terminal (13),
l'unité de commande de dispositif terminal (11) comprenant une unité de requête d'authentification (111) qui génère un premier nombre aléatoire (R1), et qui transmet à la station de base (20), par l'intermédiaire de l'unité de communication de dispositif terminal (13), une requête d'authentification incluant le premier nombre aléatoire (R1) et des informations d'identification, associées à la clé unique, pour le dispositif terminal de communication sans fil (10),
une unité de dérivation de clé de chiffrement authentifié qui reçoit une requête de réponse en provenance de la station de base (20), laquelle a acquis un second nombre aléatoire (R2) généré par le serveur d'authentification (30) ayant reçu la requête d'authentification en provenance de la station de base (20), un premier texte chiffré authentifié obtenu par chiffrement authentifié du premier nombre aléatoire (R1) et du second nombre aléatoire (R2), un deuxième texte chiffré authentifié obtenu par chiffrement authentifié du second nombre aléatoire (R2), et une première clé de chiffrement authentifié, calculée par le serveur d'authentification (30), sur la base du premier nombre aléatoire (R1), du second nombre aléatoire (R2) et de la clé unique, la première clé de chiffrement authentifié étant utilisée pour calculer le premier texte chiffré authentifié et le deuxième texte chiffré authentifié, la requête de réponse incluant le second nombre aléatoire (R2) et le premier texte chiffré authentifié, et qui calcule une seconde clé de chiffrement authentifié sur la base du premier nombre aléatoire (R1), du second nombre aléatoire (R2) et de la clé unique, et
une unité de traitement de réponse (113) qui renvoie, en réponse à ladite requête de réponse, à la station de base (20), par l'intermédiaire de l'unité de communication de dispositif terminal, une réponse incluant un troisième texte chiffré authentifié obtenu par chiffrement authentifié du second nombre aléatoire (R2) à l'aide de la seconde clé de chiffrement authentifié calculée par l'unité de dérivation de clé de chiffrement authentifié ;
la station de base (20) comprend une unité de commande de station de base (21) et une unité de communication de station de base (23),
l'unité de commande de station de base (21) comprenant une unité de transfert de requête d'authentification (211) qui reçoit en provenance du dispositif terminal de communication sans fil (10), par l'intermédiaire de l'unité de communication de station de base (23), la requête d'authentification incluant le premier nombre aléatoire (R1) et les informations d'identification pour le dispositif terminal de communication sans fil (10), et qui transmet la requête d'authentification ainsi reçue au serveur d'authentification (30),
une unité de réception de vecteur d'authentification (212) qui reçoit en provenance du serveur d'authentification (30), par l'intermédiaire de l'unité de communication de station de base (23), un vecteur d'authentification incluant le second nombre aléatoire (R2) généré par le serveur d'authentification (30), un premier texte chiffré authentifié obtenu par chiffrement authentifié du premier nombre aléatoire (R1) et du second nombre aléatoire (R2), un deuxième texte chiffré authentifié obtenu par chiffrement authentifié du second nombre aléatoire (R2), et une première clé de chiffrement authentifié, et
une unité de transmission de requête de réponse (213) qui transmet au dispositif terminal de communication sans fil (10), par l'intermédiaire de l'unité de communication de station de base (23), une requête de réponse incluant le second nombre aléatoire (R2) et le premier texte chiffré authentifié inclus dans le vecteur d'authentification ; et le serveur d'authentification (30) comprend une unité de commande de serveur d'authentification et une unité de communication de serveur d'authentification (33), l'unité de commande de serveur d'authentification comprenant
une unité de réception de requête d'authentification (311) qui reçoit en provenance de la station de base (20), par l'intermédiaire de l'unité de communication de serveur d'authentification (33), la requête d'authentification incluant le premier nombre aléatoire (R1) et des informations d'identification pour le dispositif terminal de communication sans fil (10), et
une unité de préparation de vecteur d'authentification (312) qui génère le second nombre aléatoire (R2), qui génère le vecteur d'authentification en calculant la première clé de chiffrement authentifié sur la base du premier nombre aléatoire (R1), du second nombre aléatoire (R2) et de la clé unique, en calculant le premier texte chiffré authentifié obtenu par chiffrement authentifié du premier nombre aléatoire (R1) et du second nombre aléatoire (R2), et en calculant le deuxième texte chiffré authentifié obtenu par chiffrement authentifié du second nombre aléatoire (R2), et qui transmet le vecteur d'authentification à la station de base (20) par l'intermédiaire de l'unité de communication de serveur d'authentification (33).

9. Système d'authentification et de partage de clés selon la revendication 8, dans lequel :
l'unité de requête d'authentification (111) transmet à la station de base (20), par l'intermédiaire de l'unité de communication de dispositif terminal, une requête d'authentification obtenue en chiffrant le premier nombre aléatoire (R1) et les informations d'identification pour le dispositif terminal de communication sans fil (10) à l'aide d'une clé publique du dispositif terminal de communication sans fil (10) ;
l'unité de transfert de requête d'authentification (211) transmet la requête d'authentification au serveur d'authentification (30) ; et
l'unité de réception de requête d'authentification (311) reçoit la requête d'authentification par l'intermédiaire de l'unité de communication de serveur d'authentification (33), et acquiert le premier nombre aléatoire (R1) et les informations d'identification pour le dispositif terminal de communication sans fil (10) en déchiffrant la requête d'authentification à l'aide d'une clé privée.

10. Station de base (20) comprenant :
une unité de communication de station de base (23) qui communique avec un dispositif terminal de communication sans fil (10) et un serveur d'authentification (30), dans laquelle le serveur d'authentification (30) et le dispositif terminal de communication sans fil (10) sont configurés pour partager une clé unique ; et
une unité de commande de station de base (21) comprenant
une unité de transfert de requête d'authentification (211) qui reçoit en provenance du dispositif terminal de communication sans fil (10), par l'intermédiaire de l'unité de communication de station de base (23), une requête d'authentification incluant un premier nombre aléatoire (R1) et des informations d'identification, associées à la clé unique, pour le dispositif terminal de communication sans fil (10), et qui transmet la requête d'authentification ainsi reçue au serveur d'authentification (30), une unité de réception de vecteur d'authentification (212) qui
reçoit en provenance du serveur d'authentification (30), par l'intermédiaire de l'unité de communication de station de base (23), un vecteur d'authentification incluant un second nombre aléatoire (R2) généré par le serveur d'authentification (30), un premier texte chiffré authentifié obtenu par chiffrement authentifié du premier nombre aléatoire (R1) et du second nombre aléatoire (R2), un deuxième texte chiffré authentifié obtenu par chiffrement authentifié du second nombre aléatoire (R2), et une première clé de chiffrement authentifié, calculée par le serveur d'authentification (30), sur la base du premier nombre aléatoire (R1), du second nombre aléatoire (R2) et de la clé unique, la première clé de chiffrement authentifié étant utilisée pour calculer le premier texte chiffré authentifié et le deuxième texte chiffré authentifié, et
une unité de transmission de requête de réponse (213) qui transmet au dispositif terminal de communication sans fil (10), par l'intermédiaire de l'unité de communication de station de base (23), une requête de réponse incluant le second nombre aléatoire (R2) et le premier texte chiffré authentifié inclus dans le vecteur d'authentification, la station de base étant en outre configurée pour recevoir, en réponse à ladite requête de réponse, en provenance du dispositif terminal de communication sans fil, une réponse incluant un troisième texte chiffré authentifié calculé par le dispositif terminal de communication sans fil,
dans laquelle une seconde clé de chiffrement authentifié est calculée, par le dispositif terminal de communication sans fil, sur la base du premier nombre aléatoire, du second nombre aléatoire et de la clé unique en réponse à la réception de la requête de réponse en provenance de l'unité de transmission de requête de réponse, et le troisième texte chiffré authentifié est généré, par le dispositif terminal de communication sans fil, par chiffrement authentifié du second nombre aléatoire à l'aide de la seconde clé de chiffrement authentifié.
